# EUROPÄISCHE PATENTSCHRIFT

(11) **EP 4 032 836 B1**
(45) Veröffentlichungstag und Bekanntmachung des Hinweises auf die Patenterteilung: **21.08.2024**
(21) Anmeldenummer: 21207154.2
(22) Anmeldetag: 09.11.2021
(51) Int. Cl.: B65G 47/14

(54) **STUFENFÖRDERER, STUFENFÖRDERSYSTEM UND VERFAHREN ZUR ÄNDERUNG DER STUFENBREITE EINES STUFENFÖRDERERS**
STEP CONVEYOR, STEP CONVEYOR SYSTEM AND METHOD FOR CHANGING THE STEP WIDTH OF A STEP CONVEYOR
TRANSPORTEUR ÉTAGÉ, SYSTÈME DE TRANSPORTEUR ÉTAGÉ ET PROCÉDÉ DE MODIFICATION DE LA LARGEUR D'ÉTAGE D'UN TRANSPORTEUR ÉTAGÉ

(30) Priorität: 20.01.2021 DE 102021101108
(43) Veröffentlichungstag der Anmeldung: 27.07.2022
(73) Patentinhaber: Afag Holding AG, 6144 Zell (CH)
(72) Erfinder: Bott, Klaus, 90518 Altdorf (DE); Piechatzek, Claus, 92224 Amberg (DE); Kuhn, Georg, 92253 Schnaittenbach (DE); Riß, Johann, 92272 Freudenberg (DE)
(74) Vertreter: Lindner Blaumeier Patent- und Rechtsanwälte

(56) Entgegenhaltungen:
- CN-A- 106 006 075
- US-A- 3 665 987
- US-A- 5 385 227
- US-A- 5 647 472

## Beschreibung

Die Erfindung betrifft einen Stufenförderer zur Förderung von Teilen aus einem Vorratsbehälter zu einer oberhalb des Vorratsbehälters liegenden Zielposition, wobei der Stufenförderer wenigstens eine feststehende Platte und eine jeweilige der feststehenden Platte zugeordnete Förderoberfläche umfasst, die gewinkelt zu einer Seitenfläche der feststehenden Platte steht und durch einen Aktor des Stufenförderers bezüglich der feststehenden Platte beweglich ist, um die Teile auf der Förderoberfläche entlang dieser Seitenfläche in Förderrichtung anzuheben, wobei die Förderoberfläche oder wenigstens eine der Förderoberflächen durch ein Endstück gebildet ist, das lösbar an einer Förderplatte angebracht ist, die durch den Aktor verschiebbar ist, wobei das Endstück die Förderplatte in die Förderrichtung verlängert. Ein solcher Stufenförderer ist aus der Druckschrift CN 106 006 075 A bekannt. Daneben betrifft die Erfindung ein Stufenfördersystem sowie ein Verfahren zur Änderung der Stufenbreite eines Stufenförderers. Stufenförderer werden insbesondere zur Vereinzelung von Teilen genutzt, die zunächst als Schüttgut zugeführt werden und anschließend vereinzelt und ausgerichtet weiterverarbeitet werden sollen. Beispielsweise werden Stufenförderer genutzt, um Schrauben, Muttern oder Ähnliches zu vereinzeln und optional auszurichten und nachfolgenden Stufen eines Produktionsprozesses zuzuführen. Ein Beispiel für einen solchen Stufenförderer ist beispielsweise in der Druckschrift DE 10 2013 112 942 A1 offenbart.

Die Druckschrift CN 106 006 075 A offenbart einen Stufenförderer zur Förderung von Teilen aus einem Vorratsbehälter zu einer oberhalb des Vorratsbehälters liegenden Zielposition. Die Teile werden hierbei durch eine bewegte Platte entlang einer Wand angehoben. Hierbei wird das angehobene Teil durch eine Rolle abgestützt, die an einem separat von der bewegten Platte ausgebildeten Aufsatz vorgesehen ist.

Um eine gute Vereinzelung und Ausrichtung von Teilen zu erreichen, muss die Stufengeometrie eines Stufenförderers auf die Geometrie der geförderten Teile abgestimmt werden. Während dies z.B. in langfristig für gleiche Produktionsaufgaben genutzten Fertigungsanlagen problemlos ist, kann dies die Nutzbarkeit von Stufenförderern einschränken, wenn in relativ kurzen Zeiträumen Produktionsabläufe variiert werden, beispielsweise bei einer Kleinserienfertigung. Auch im Bereich der Verpackungstechnik bzw. bei der Handhabung von Komponenten, Medikamenten oder ähnliches im Medizinbereich kann es gewünscht sein, zu unterschiedlichen Zeiten Teile mit unterschiedlicher Form oder Größe zu verarbeiten. In diesen Fällen sind Stufenförderer zur Vereinzelung bzw. Ausrichtung nicht ohne Weiteres nutzbar bzw. es müssen verschiedene Stufenförderer vorgehalten werden oder es muss eine aufwändige Umrüstung erfolgen.

Der Erfindung liegt somit die Aufgabe zugrunde, einen Stufenförderer anzugeben, der mit geringem Aufwand zur Förderung von unterschiedlichen Teilen umrüstbar ist.

Die Aufgabe wird erfindungsgemäß durch einen Stufenförderer der eingangs genannten Art gelöst, wobei die jeweilige Förderplatte wenigstens einen Führungsstift aufweist, der sich in die oder eine Querrichtung des Stufenförderers, die gewinkelt, insbesondere in einem Winkel zwischen 70° und 110°, zur Förderrichtung steht, erstreckt und der in einer jeweiligen Ausnehmung oder Durchbrechung des Endstücks zumindest abschnittsweise aufgenommen ist, und/oder wobei das jeweilige Endstück wenigstens einen Führungsstift aufweist, der sich in die Querrichtung des Stufenförderers erstreckt und der in einer jeweiligen Ausnehmung oder Durchbrechung der Förderplatte zumindest abschnittsweise aufgenommen ist.

Die lösbare Befestigung des Endstücks an der Förderplatte ermöglicht es, den Stufenförderer mit geringem Aufwand umzurüsten, indem das Endstück von wenigstens einer Förderplatte entfernt und durch ein Austauschendstück ersetzt wird. Das Austauschendstück kann beispielsweise ein unterschiedliches Oberflächenprofil der Förderoberfläche aufweisen, um die Form der Förderoberfläche zur optimalen Vereinzelung und/oder Ausrichtung von zu fördernden Teilen anzupassen. Insbesondere kann durch den Austausch des Endstücks auch die Stufenbreite der Förderoberfläche angepasst werden, so dass beispielsweise bei einem Wechsel zu kleineren bzw. schmaleren zu fördernden Teilen die Stufenbreite reduziert werden kann, um weiterhin eine zuverlässige Vereinzelung zu erreichen. Eine schmalere Stufenbreite der Förderoberfläche kann beispielsweise dadurch kompensiert werden, dass die feststehenden Platten durch breitere feststehende Platten ersetzt werden bzw. indem eine an diesen oberseitig angebrachte Stützkomponente ebenfalls gewechselt wird, wie es später noch erläutert werden wird.

Es sind somit relativ weitgehende Modifikationen des Stufenförderers zur Anpassung an die zu fördernden Teile möglich, insbesondere ohne dass ein Eingriff in die Aktorik oder Bewegungsmechanik des Stufenförderers erforderlich ist. Während für übliche Stufenförderer eine Umrüstung zur Anpassung an andere zu fördernde Teile somit nicht oder nur mit erheblichem Aufwand möglich ist, ist dies beim erfindungsgemäßen Stufenförderer mit sehr geringem Aufwand möglich.

Die feste Platte bzw. eine an diese angebrachte Stützkomponente und die Förderoberfläche bilden jeweils einzelne Stufen des Stufenförderers. Insbesondere kann der Stufenförderer mehrere feste Platten, beispielsweise zwei feste Platten, aufweisen, um mehrere Stufen fester Höhe bereitzustellen, wobei jeweils eine zugeordnete durch den Aktor bewegte Förderoberfläche genutzt wird, um die Teile auf die Höhe dieser jeweiligen festen Stufe anzuheben.

Die Verschiebung der Förderplatte kann im Wesentlichen parallel zur Seitenfläche der festen Platte erfolgen. Hierbei können toleranzbedingte Abweichungen auftreten, so dass die Verschiebung beispielsweise in einem Winkel von weniger als 10° oder weniger als 5° zu der Seitenfläche erfolgen kann. Die Verschiebe- bzw. Förderrichtung kann gewinkelt zur Horizontalen, insbesondere in einem Winkel von wenigstens 45° oder wenigstens 60°, verlaufen, um durch die Verschiebung der Förderoberfläche die Anhebung der Teile zu realisieren.

Die Förderoberfläche und/oder eine Stirnfläche der festen Platte bzw. eine durch eine mit der festen Platte gekoppelte Stützkomponente ausgebildete Zwischenlagerfläche für die Teile kann im Wesentlichen senkrecht, beispielsweise in einem Winkel zwischen 80° und 100°, zu der Seitenfläche der feststehenden Platte stehen. Durch eine Neigung der Seitenfläche der feststehenden Platte oder alternativ durch Wahl eines geeigneten Winkels zwischen der Förder- bzw. Zwischenlagerfläche für die Teile einerseits und der Seitenfläche der feststehenden Platte andererseits kann bei Erreichen einer ausreichenden Höhe der Förderoberfläche eine Bewegung, beispielsweise ein Rutschen oder Rollen, der Teile zu der durch die feststehende Platte gestützten Zwischenlagerfläche erfolgen. Bei einer mehrstufigen Förderung kann eine weitere Bewegung des Teils hierbei zunächst durch die Seitenfläche die nächste Förderplatte gestoppt werden, bis die mit dieser gekoppelte Förderoberfläche ausreichend weit abgesenkt ist, dass sich die Teile sich auf dieser Förderoberfläche weiterbewegen können usw.

Vorzugsweise ist der Stufenförderer unter Reinraumbedingungen nutzbar und/oder ist für einen Lebensmittel- bzw. Medikamentenkontakt geeignet. In diesen Bereichen ist es vorteilhaft, den Stufenförderer elektrisch anzutreiben. Möglichkeiten hierfür werden später noch erläutert werden. Zudem sind geeignete Materialien zu wählen. Die feststehende Platte und die Förderplatte sowie weitere Komponenten, beispielsweise ein Gehäuse, können beispielsweise aus Edelstahl hergestellt sein. Das Endstück bzw. eine Stützkomponente, die zur Ausbildung der Zwischenlagerfläche an der festen Platte dient, können entweder ebenfalls aus Edelstahl oder aus einem Kunststoff gebildet sein. Hierbei werden vorzugsweise Kunststoffe genutzt, die für einen Kontakt mit Lebensmitteln bzw. Medikamenten geeignet sind, beispielsweise Polyethylen oder Polypropylen.

Das Endstück kann durch wenigstens ein Befestigungsmittel, insbesondere eine Schraube, an der Förderplatte angebracht sein, wobei das Befestigungsmittel eine seitliche Abschlussfläche des Endstücks in eine Querrichtung des Stufenförderers, die gewinkelt, insbesondere in einem Winkel zwischen 70° und 110°, zur Förderrichtung steht, durchsetzt und an der Förderplatte angreift, wobei insbesondere die Befestigung des Endstücks ausschließlich über die Befestigungsmittel erfolgt, die die genau eine seitliche Abschlussfläche durchsetzen.

Insbesondere ist das jeweilige Befestigungsmittel mit Hilfe eines in Querrichtung freiliegenden Betätigungsabschnitts, beispielsweise eines Schraubenkopfes, lösbar. Gegenüber Befestigungsmitteln, die von der Förderfläche her angreifen, kann eine glattere und somit besser zu reinigende Förderoberfläche bereitgestellt werden, womit hierdurch die Eignung für einen Einsatz im Lebensmittelbereich bzw. medizinischen Bereich verbessert wird.

Durch eine ausschließliche Befestigung des Endstücks über Befestigungsmittel, die genau eine seitliche Abschlussfläche durchsetzen, kann der Wechsel von Endstücken weiter erleichtert werden. Beispielsweise kann es ausreichend sein, eine oder mehrere Schrauben an einer seitlichen Abschlussfläche zu öffnen, um anschließend das Endstück abheben oder abziehen zu können. Insbesondere kann hierdurch ermöglicht werden, dass die gesamte Umrüstung des Stufenförderers zur Förderung anderer Teile von einer Seite des Stufenförderers her erfolgen kann, so dass beispielsweise ein Gehäuse des Stufenförderers nur einseitig geöffnet werden muss bzw. eine ausreichende Zugänglichkeit für eine entsprechende Umrüstung leichter erreicht werden kann.

Die Querrichtung steht insbesondere im Wesentlichen senkrecht zur Förderrichtung, beispielsweise in einem Winkel zwischen 70° und 110° zur Förderrichtung. Insbesondere steht die Querrichtung auch gewinkelt, insbesondere senkrecht bzw. in einem Winkel zwischen 70° und 110°, auf der Normalen der Seitenfläche der feststehenden Platte. Die Befestigungsmittel können somit von den seitlichen Rändern des Stufenförderers her zugänglich sein. Gegenüber einem Zugriff beispielsweise über eine Stirnfläche in Stapelrichtung der Platten kann hierdurch ein leichterer Zugriff erreicht werden und es kann vermieden werden, dass die Befestigungsmittel bzw. Aufnahmeräume für diese zu einer Reibung zwischen den Komponenten des Stufenförderers führen bzw. die Nutzung größerer Spalte zur Vermeidung von Reibung erfordern.

Die Abschlussfläche kann gewinkelt, insbesondere in einem Winkel zwischen 70° und 110°, insbesondere im Wesentlichen senkrecht, zu der Förderoberfläche und/oder der Seitenfläche der feststehenden Platte stehen. Insbesondere können zwei oder mehr Befestigungsmittel pro Endstück verwendet werden, was zu einer Verbesserung der Festlegung der Ausrichtung des Endstücks führen kann.

Die jeweilige Förderplatte weist wenigstens einen Führungsstift auf, der sich in die oder eine Querrichtung des Stufenförderers, die gewinkelt, insbesondere in einem Winkel zwischen 70° und 110°, zur Förderrichtung steht, erstreckt und der in einer jeweiligen Ausnehmung oder Durchbrechung des Endstücks zumindest abschnittsweise aufgenommen ist oder alternativ oder ergänzend weist das jeweilige Endstück wenigstens einen Führungsstift auf, der sich in die Querrichtung des Stufenförderers erstreckt und der in einer jeweiligen Ausnehmung oder Durchbrechung der Förderplatte zumindest abschnittsweise aufgenommen ist. Die Nutzung wenigstens eines Führungsstiftes kann die Festlegung der Position und/oder Ausrichtung des Endstücks unterstützen. Dies kann einerseits dazu dienen, die Montage zu erleichtern, beispielsweise indem durch den Führungsstift die Position der Durchbrechung der Abschlussfläche bezüglich einer Aufnahme für das Befestigungsmittel an der Förderplatte festgelegt wird. Zudem kann durch einen oder insbesondere mehrere Führungsstifte die Position und Orientierung abgesehen von einem Freiheitsgrad in Längsrichtung des wenigstens einen Führungsstiftes bereits festgelegt sein, so dass es ausreicht, wenn das Befestigungsmittel eine Bewegung in diese Richtung blockiert, um das Endstück an der Förderplatte zu sichern. Hierdurch kann die Montage weiter erleichtert werden.

Der Führungsstift erstreckt sich vorzugsweise in einem Winkel zwischen 80° und 100° zur Abschlussfläche und/oder in einer Richtung, die in einem Winkel von maximal 10° zur Seitenfläche der feststehenden Platte steht. Insbesondere erstreckt sich der jeweilige Führungsstift der Förderplatte in Querrichtung in Richtung der Abschlussfläche des Endstücks bzw. der Führungsstift des Endstücks in Querrichtung von der Abschlussfläche weg. Das Endstück kann dann in Querrichtung über den Führungsstift geführt bis zum einem Anschlag geschoben und durch diesen und das Befestigungsmittel geklemmt werden. Insbesondere können insgesamt zwei oder mehr Führungsstifte genutzt werden, um das Endstück beispielsweise verdrehsicher an der Förderplatte festzulegen. Alternativ könnte dies auch durch einen Führungsstift mit unrunder Form erreicht werden.

Eine durch die feststehende Platte und/oder durch eine an dieser angebrachte Stützkomponente gebildete Zwischenlagerfläche, zu der die Teile durch die der jeweiligen feststehenden Platte zugeordnete Förderoberfläche geführt werden, kann eine um wenigstens 20 % oder um wenigstens 50 % größere Ausdehnung senkrecht zu der Seitenfläche dieser feststehenden Platte aufweisen als die zugeordnete Förderoberfläche. In üblichen Stufenförderern werden gleiche Breiten für die verschiedenen Stufen genutzt. Wie bereits eingangs erläutert, kann bei einer Förderung von Teilen, die merklich schmaler als die Stufenbreite sind, eine deutlich schlechtere Vereinzelung bzw. Ausrichtung resultieren. Im erfindungsgemäßen Stufenförderer ist es durch Montage geeigneter Endstücke möglich, gezielt schmalere Förderoberflächen zu nutzen und dies dadurch zu kompensieren, dass eine breitere Zwischenlagerfläche genutzt wird. Hierdurch kann eine ähnlich gute Vereinzelung und Ausrichtung erreicht werden, wie bei einer Nutzung einer schmaleren Stufenbreite für alle Stufen. Gleichzeitig ist jedoch der Aufwand zur Umrüstung des Stufenförderers erheblich geringer als für eine Reduzierung der Stufenbreite aller Stufen, da hierfür beispielsweise auch Modifikationen der Antriebsmechanik erforderlich wären. Auch die Teilezufuhr und -abfuhr kann aufgrund des vorgeschlagenen Vorgehens beim erfindungsgemäßen Stufenförderer unverändert bleiben, auch wenn schmalere Teile gefördert werden sollen.

Die oder eine Zwischenlagerfläche, zu der die Teile durch die jeweilige Förderoberfläche geführt werden, kann durch die oder eine Stützkomponente gebildet sein, die lösbar an der der jeweiligen Förderoberfläche zugeordneten feststehenden Platte befestigt ist und diese in die Förderrichtung verlängert. Insbesondere kann die Stützkomponente auf gleiche Weise an der feststehenden Platte befestigt sein, wie das Endstück an der Förderplatte. Somit können die obig erläuterten Merkmale zur Verbindung des Endstücks mit der Förderplatte auf die Verbindung der Stützkomponente mit der feststehenden Platte übertragen werden. Die diesbezüglichen Merkmale des Endstücks können auf die Stützkomponente und die diesbezüglichen Merkmale der Förderplatte auf die feststehende Platte übertragen werden.

Durch die Ausbildung der Zwischenlagerfläche durch eine lösbar an der feststehenden Platte befestigte Stützkomponente ist es möglich, nicht nur die Förderoberfläche durch Wechsel des Endstücks anzupassen sondern auch die Zwischenlagerfläche durch Wechsel der Stützkomponente. Beispielsweise kann es möglich sein, durch geeignete Wahl der Oberflächenform oder Textur der Stützkomponente die Ausrichtung bzw. Vereinzelung von Teilen zu unterstützen oder je nach zu fördernden Teilen Förderoberflächen und Zwischenlagerflächen aus unterschiedlichen Materialien zu nutzen.

Wechselbare Stützkomponenten können insbesondere vorteilhaft sein, wenn zur Anpassung an bestimmte Teile ein Endstück mit einer reduzierten Breite senkrecht zur Seitenfläche der feststehenden Platte genutzt werden soll. Dies würde bei ansonsten gleicher Fördergeometrie zu breiten Spalten zwischen Förderoberfläche und Zwischenlagerfläche führen, wenn sich dieser auf gleicher Höhe befinden. Dies kann vermieden werden, wenn auch die Breite der Zwischenlagerfläche durch Austausch der Stützkomponente angepasst wird, um die Reduzierung der Breite einer Förderoberfläche durch entsprechende Verbreiterung der Zwischenlagerfläche zu kompensieren.

Um zu erreichen, dass auch bei Höhen der Förderoberfläche unterhalb der Zwischenlagerfläche und insbesondere unterhalb der Stützkomponente keine allzu großen Spalte resultieren, ist es möglich, die feststehende Platte zu tauschen oder in Richtung der zugeordneten Förderoberfläche zu verlagern, beispielsweise durch ein Verschieben innerhalb von Nuten und ein Befestigen an anderer Position oder durch ein Versetzen zwischen fest vorgegebenen Positionen. Alternativ oder ergänzend können zu diesem Zweck zusätzliche Abstandshalter auf der Seitenfläche installiert werden.

Die Stützkomponente kann durch wenigstens ein Befestigungsmittel, insbesondere eine Schraube, an der feststehenden Platte angebracht sein, wobei das Befestigungsmittel eine seitliche Abschlussfläche der Stützkomponente in die oder eine Querrichtung des Stufenförderers, die gewinkelt, insbesondere in einem Winkel zwischen 70° und 110°, zur Förderrichtung steht, durchsetzt und an der Förderplatte angreift, wobei insbesondere die Befestigung der Stützkomponente ausschließlich über die Befestigungsmittel erfolgt, die die genau eine seitliche Abschlussfläche durchsetzen. Hierdurch können die gleichen Vorteile erreicht werden, wie durch die obig erläuterte entsprechende Befestigung des Endstücks an der Förderplatte.

Die feststehende Platte kann wenigstens einen Führungsstift aufweisen, der sich in die oder eine Querrichtung des Stufenförderers, die gewinkelt, insbesondere in einem Winkel zwischen 70° und 110°, zur Förderrichtung steht, erstreckt und der in einer jeweiligen Ausnehmung oder Durchbrechung der Stützkomponente zumindest abschnittsweise aufgenommen ist, und/oder die jeweilige Stützkomponente kann wenigstens einen Führungsstift aufweisen, der sich in die Querrichtung des Stufenförderers erstreckt und der in einer jeweiligen Ausnehmung oder Durchbrechung der feststehenden Platte zumindest abschnittsweise aufgenommen ist. Hierdurch können die gleichen Vorteile erreicht werden, wie sie obig zur Führung des Endstücks durch die Führungsstifte erläutert wurden.

Vorzugsweise ist der Aktor ein Elektromotor. Ergänzend oder alternativ ist bevorzugt, dass der Aktor dazu dient, eine Rotation einer drehbaren Komponente anzutreiben, die derart mit der Förderoberfläche gekoppelt ist, dass eine Rotation der drehbaren Komponente zu einer linearen Verschiebung der Förderoberfläche führt.

Typischerweise werden bewegte Stufen von Stufenförderern pneumatisch angetrieben. Bei Reinraumanwendungen bzw. bei der Förderung von Lebensmitteln, Medikamenten oder anderen Teilen für den Medizinbereich kann hierbei problematisch sein, dass durch Verunreinigungen der Druckluft Fremdkörper eingetragen werden können. Ein pneumatischer Antrieb mit hinreichend verunreinigungsarmer Druckluft ist jedoch sehr aufwendig. Daher ist es insbesondere in den genannten Bereichen bzw. Anwendungsfällen vorteilhaft, den Stufenförderer elektrisch anzutreiben bzw. einen Elektromotor als Aktor zu nutzen.

Es ist prinzipiell möglich, unmittelbar einen Linearmotor zum Antrieb des Stufenförderers zu nutzen. Dies ist technisch jedoch relativ aufwendig, so dass es typischerweise vorteilhaft ist, einen Elektromotor mit drehender Abtriebswelle zu nutzen. Die drehbare Komponente kann die Abtriebswelle selbst oder beispielsweise eine mit dieser gekoppelte Scheibe oder Ähnliches sein. Der Elektromotor ist vorzugsweise ein Niederspannungsmotor, beispielsweise ein 24 V Motor. Hierdurch kann ein netzunabhängiger Betrieb des Stufenförderers, beispielsweise eine Speisung über Batterien, realisiert werden.

Die drehbare Komponente kann einen gegenüber ihrer Drehachse exzentrisch angeordneten Vorsprung aufweisen, der in eine Ausnehmung oder Durchbrechung der Förderplatte oder wenigstens einer der Förderplatten oder einer jeweiligen starr mit der jeweiligen Förderplatte verbundenen Kopplungskomponente eingreift. Der Vorsprung kann bei einer Rotation der drehbaren Welle im Wesentlichen parallel zu der Förderplatte bzw. der Seitenfläche der zugeordneten feststehenden Platte bewegt werden. Werden die Abmessungen der Ausnehmung bzw. Durchbrechung so gewählt, dass die Ausdehnung in Förderrichtung nur unwesentlich, beispielsweise um maximal 10 % oder maximal 20 %, größer ist als die Ausdehnung des Vorsprungs, zumindest jedoch deutlich kleiner als der doppelte Abstand des Vorsprungs von der Drehachse, so folgt die Bewegung der Förderplatte in Förderrichtung im Wesentlichen der Bewegung des Vorsprungs in diese Richtung. In Richtung senkrecht zur Förderrichtung kann die Abmessung der Ausnehmung bzw. der Durchbrechung so gewählt werden, dass sie zumindest doppelt so groß ist wie der Abstand des Vorsprungs von der Drehachse der drehbaren Komponente. Bewegungen des Vorsprungs senkrecht zur Förderrichtung werden somit von der Förderplatte entkoppelt, so dass die kreisförmige Bewegung des Vorsprungs in eine Linearbewegung der Förderplatte mit periodisch wechselnder Richtung umgesetzt wird.

Das beschriebene Vorgehen ist einerseits sehr einfach, insbesondere da keine komplexe Steuerung des Stufenförderers erforderlich ist, sondern ein Betrieb beispielsweise schlicht dadurch möglich ist, dass ein die drehbare Komponente antreibender Elektromotor kontinuierlich bestromt wird, so dass er sich z.B. mit konstanter Drehzahl dreht. Insgesamt resultiert eine einfache, günstige und robuste Implementierung des Stufenförderers. Zugleich wird erreicht, dass die Geschwindigkeit der Förderoberfläche zu den Umkehrpunkten hin kontinuierlich sinkt und somit plötzliche Richtungswechsel vermieden werden. Dies führt einerseits zu einer Verringerung der Belastung der Mechanik des Stufenförderers und somit zu geringerem Verschleiß und andererseits zu einer schonenderen Förderung der Teile.

Alternativ könnte ein Antrieb über eine drehbare Komponente, beispielsweise einen Rotationselektromotor, erfolgen, indem die Rotationsbewegung über eine Zahnstange, eine auf der Förderplatte laufende Gummiwalze oder Ähnliches in eine Linearbewegung umgesetzt wird. Hierbei wäre jedoch eine aufwendigere Steuerung erforderlich, da der Drehsinn der drehbaren Komponente an den Umkehrpunkten der Förderplatte umgekehrt werden müsste. Der Aufwand für die Ansteuerung des Antriebs würde zudem weiter steigen, wenn auch das obig beschriebene Abbremsen der Förderoberflächen im Bereich der Umkehrpunkte realisiert werden soll.

Der Stufenförderer kann wenigstens zwei der Förderplatten umfassen, wobei die Förderplatten derart mit dem Aktor gekoppelt sind, dass sie bei einem Betrieb des Aktors gemeinsam in die gleiche Richtung bewegt werden. Beispielsweise kann der exzentrisch angeordnete Vorsprung der drehbaren Komponente durch eine Stange gebildet werden, die Durchbrechungen beider Förderplatten durchsetzt oder Ähnliches.

Der Stufenförderer kann eine Vorrichtung zum Abführen von Staub oder anderen kleinteiligen Verunreinigungen aufweisen. Beispielsweise kann zwischen dem Vorratsbehälter und einer benachbarten Förderoberfläche bzw. der mit dieser gekoppelten Förderplatte ein Spalt verbleiben, durch den entsprechende Verunreinigungen in einen Sammelbehälter, auf eine Rutsche zur Abfuhr der Verunreinigungen oder Ähnliches fallen können.

Neben dem erfindungsgemäßen Stufenförderer umfasst die Erfindung ein Stufenfördersystem, das einen erfindungsgemäßen Stufenförderer sowie wenigstens ein Austauschendstück umfasst, wobei das Austauschendstück dazu dient, ein jeweiliges zugeordneten Endstück des Stufenförderers im Rahmen einer Umrüstung zu ersetzen. Das erfindungsgemäße Stufenfördersystem ermöglicht somit einen bedarfsgerechten Austausch wenigstens eines der Endstücke, um den Stufenförderer an eine jeweilige Förderaufgabe anzupassen.

Die durch das Austauschendstück im montierten Zustand gebildete Förderoberfläche kann eine Ausdehnung senkrecht zur Seitenfläche der zugeordneten feststehenden Platte aufweisen, die sich von der Ausdehnung der Förderoberfläche des zugeordneten Endstücks in diese Richtung unterscheidet. Ergänzend oder alternativ kann die Förderoberfläche des Austauschendstücks eine andere Oberflächentextur und/oder -form als das zugeordnete Endstück aufweisen. Vorteile der anpassbaren Stufenbreite, Oberflächentextur und/oder - form wurden bereits obig mit Bezug auf den erfindungsgemäßen Stufenförderer erläutert.

Soweit zum Umrüsten des Stufenförderers weitere Komponenten erforderlich sein sollten, beispielsweise eine Austauschstützkomponente, die eine Stützkomponente des Stufenförderers im Rahmen der Umrüstung ersetzen kann, können auch diese weiteren Austauschkomponenten Teil des erfindungsgemäßen Stufenförderersystems sein.

Zudem betrifft die Erfindung ein Verfahren zur Änderung der Stufenbreite eines erfindungsgemäßen Stufenförderers, wobei wenigstens ein Endstück des Stufenförderers durch ein Austauschendstück ersetzt wird, wobei die durch das Austauschendstück im montierten Zustand gebildete Förderoberfläche eine Ausdehnung senkrecht zur Seitenfläche der zugeordneten feststehenden Platte aufweist, die sich von der Ausdehnung der Förderoberfläche des vorangehend montierten Endstücks in diese Richtung unterscheidet. Je nachdem, wie stark die Ausdehnung der Förderoberfläche durch diesen Umbau verändert wird, kann es zweckmäßig sein, in einem zusätzlichen Verfahrensschritt wenigstens eine der Zwischenlagerflächen anzupassen, beispielsweise indem wie obig erläutert wenigstens eine Stützkomponente durch eine Austauschstützkomponente ausgetauscht wird und/oder die Position wenigstens einer der feststehenden Platten verändert wird und/oder wenigstens eine der feststehenden Platten durch eine Austauschplatte ersetzt wird.

Weitere Vorteile und Einzelheiten der Erfindung ergeben sich aus den Ausführungsbeispielen sowie den zugehörigen Zeichnungen. Hierbei zeigen schematisch:
- Fig. 1: ein Ausführungsbeispiel des erfindungsgemäßen Stufenfördersystems, das ein Ausführungsbeispiel des erfindungsgemäßen Stufenförderers umfasst,
- Fig. 2: ein demontiertes Endstück bzw. eine demontierte Stützkomponente, die in dem in Fig. 1 gezeigten Stufenförderer genutzt werden kann, um die Förderoberfläche bzw. eine Zwischenlagerfläche zu bilden,
- Fig. 3: die Montage des in Fig. 2 gezeigten Endstücks bzw. der in Fig. 2 gezeigten Stützkomponente an einer Förderplatte bzw. feststehenden Platte, die insbesondere im Rahmen eines Ausführungsbeispiels des erfindungsgemäßen Verfahrens erfolgen kann, und
- Fig. 4: eine Detailansicht des in Fig. 1 gezeigten Stufenförderers, die die Kopplung des Aktors mit einer der Förderplatten zeigt.

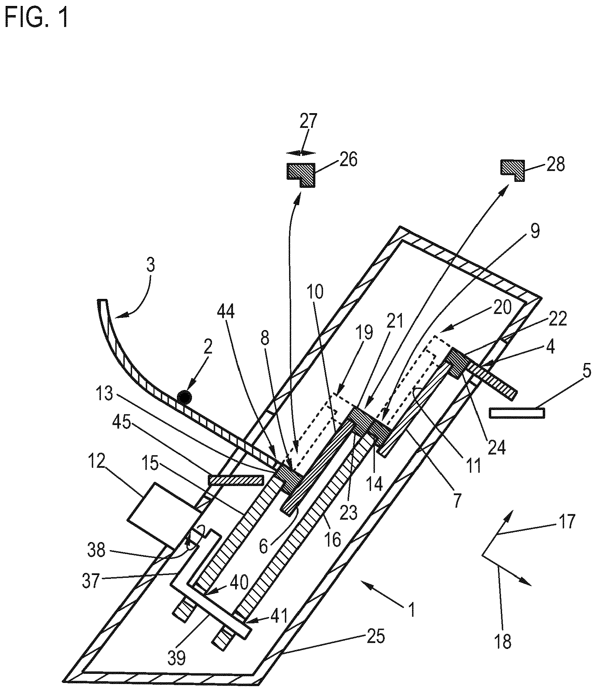

Fig. 1 zeigt einen Stufenförderer 1 zur Förderung von Teilen 2 aus einem Vorratsbehälter 3 zu einer oberhalb des Vorratsbehälters 3 liegenden Zielposition 4. Die Teile werden typischerweise als gehäuftes Schüttgut in den Vorratsbehälter 3 eingebracht, wobei in Fig. 1 aus Übersichtlichkeitsgründen nur ein einzelnes Teil 2 dargestellt ist. Der Stufenförderer 1 umfasst im Beispiel zwei feststehende Platten 6, 7, die beispielsweise direkt am Gehäuse 25 angebracht sein können. Durch in Stapelrichtung 18 jeweils benachbart zu den feststehenden Platten 6, 7 angeordnete Förderplatten 15, 16 werden mit diesen lösbar verbundene Endstücke 13, 14 getragen, die eine der jeweiligen feststehenden Platte 6, 7 zugeordnete Förderoberfläche 8, 9 bilden.

Durch einen Aktor 12 sind die Förderplatten 15, 16 und somit auch die Endstücke 13, 14 und die Förderoberflächen 8, 9 in eine Förderrichtung 17 verschiebbar. Insbesondere werden sie beim Betrieb des Stufenförderers periodisch aus der in Fig. 1 gezeigten Position in eine jeweilige gestrichelt dargestellte obere Position 19, 20 verschoben. Hierbei können die feststehenden Platten 15, 16 und somit auch die Förderoberflächen 8, 9 insbesondere gemeinsam und synchron bewegt werden.

Ausgehend von der in Fig. 1 schematisch dargestellten Betriebssituation kann das Teil 2 zunächst aufgrund des schrägen Bodens des Vorratsbehälters 3 in Stapelrichtung 18 auf die Förderoberfläche 8 zu rutschen oder rollen. Befindet sich zu dem Zeitpunkt, zu dem das Teil 2 das Ende des Vorratsbehälters erreicht, die Förderoberfläche 8 in der in Fig. 1 gezeigten Stellung, wird das Teil 2 durch die Seitenfläche 10 der feststehenden Platte 6 gestoppt und kommt somit auf der Förderoberfläche 8 zum Liegen. In anderen Stellungen der Förderplatte 15 wird das Teil 2 zunächst durch die Förderplatte 15 bzw. das Endstück 13 gestoppt und bewegt sich erst beim Erreichen der in Fig. 1 gezeigten Stellung auf die Förderoberfläche 8.

Nachdem das Teil 2 die Förderoberfläche 8 erreicht hat, führt eine Bewegung der Förderplatte 15 in Richtung der zweiten Stellung 19 zu einem Anheben des Teils 2 auf der Förderoberfläche 8, wobei das Teil 2 entlang der Seitenfläche 10 der festen Platte 6 geführt wird. Hierbei kann eine Fehlausrichtung des Teils 2 bzw. eine Schichtung von mehreren Teilen 2 auf der Förderoberfläche 8 dazu führen, dass überzählige bzw. fehlausgerichtete Teile in den Vorratsbehälter 3 zurückfallen. Im Rahmen der Förderung kann somit eine Vereinzelung bzw. Ausrichtung der Teile 2 erreicht werden.

Sobald die zweite Stellung 19 erreicht ist, kann das geförderte Teil 2 auf die Zwischenlagerfläche 21 rutschen oder rollen. Hierbei befindet sich die zweite Förderplatte 16 jedoch zunächst in ihrer zweiten Position 20, da sie synchron mit der ersten Förderplatte 15 bewegt wird. Das heißt, dass das Teil 2 zunächst auf der Zwischenlagerfläche 21 verbleibt, bis die Förderplatte 16 wieder die in Fig. 1 gezeigte Position erreicht hat. Zu diesem Zeitpunkt kann das Teil 2 auf die Förderoberfläche 9 rutschen oder rollen und anschließend durch diese weitergefördert werden, wie bereits für die vorangehende Förderung durch die Förderoberfläche 8 erläutert wurde.

Nach dem Erreichen der zweiten Stellung 20 durch die Förderoberfläche 9 kann das Teil über die Zwischenlagerfläche 22 die Zielposition 4 erreichen, die im Beispiel eine Rutsche ist, durch die das Teil 2 zu einer weiteren Einrichtung 5, beispielsweise eine Förder- oder Verarbeitungseinrichtung, geführt wird.

Die bereits erwähnte Funktion der Vereinzelung bzw. Ausrichtung der Teile 2 hängt entscheidend von der Größe und Form des Teils 2 und der Breite der Förderoberflächen 8, 9 in Stapelrichtung 18 ab. Zudem kann diese Funktion durch geeignete Formung der Förderoberfläche 8, 9 unter Umständen weiter verbessert werden. Sollen durch den Stufenförderer 1 nun zu unterschiedlichen Zeiten unterschiedliche Teile 2 gefördert werden, kann es daher gewünscht sein, unterschiedliche breite bzw. gestaltete Förderoberflächen 8, 9 zu nutzen. Um dies zu ermöglichen, werden die Förderoberflächen 8, 9, wie bereits obig erwähnt, durch lösbar mit den Förderplatten 15, 16 verbundene Endstücke 13, 14 gebildet. Ein schematisch in Fig. 1 dargestelltes Stufenfördersystem, kann neben dem Stufenförderer 1 somit für wenigstens eine der Förderplatten 15, 16 ein Austauschendstück 26 umfassen, das statt dem jeweiligen Endstück 13, 14 an der jeweiligen Förderplatte 15, 16 angebracht werden kann. Dieses kann eine andere Struktur der Förderoberfläche, beispielsweise eine zusätzliche oder anders geformte Vertiefung oder Ähnliches aufweisen. Handelt es sich hierbei um den einzigen Unterschied, ist die Umrüstung des Stufenförderers 1 nach dem Austausch der Endstücke 13, 14 bereits abgeschlossen.

Um jedoch größere oder kleinere Teile 2 besser vereinzeln zu können, kann es auch vorteilhaft sein, wenn wenigstens eines der Endstücke 13, 14 durch ein Austauschendstück 26 mit einer abweichenden Breite 27 in Stapelrichtung 18 ausgetauscht wird. Hierdurch variiert zunächst auch die Breite eines Spalts zwischen den Endstücken 13, 14 und den benachbart feststehenden Platten 6, 7 bzw. den an diesen angebrachten Stützkomponenten 23, 24. Es kann daher zweckmäßig sein, die gesamten feststehenden Platten 6, 7 ebenfalls auszutauschen. Die Umrüstung des Stufenförderers 1 ist dennoch nicht allzu aufwändig, da kein Eingriff in die Bewegungsmechanik erforderlich ist.

Besonders bevorzugt kann eine Änderung der Breite 27 der Endstücke 13, 14 jedoch dadurch kompensiert werden, dass die die Zwischenlagerflächen 21, 22 bildenden Stützkomponenten 23, 24 ebenfalls durch eine jeweilige Austauschstützkomponente 28 ersetzt werden. Unter Umständen kann es zusätzlich erforderlich sein, die Positionen der feststehenden Platten 6, 7 in Stapelrichtung 18 anzupassen, beispielsweise indem diese in Nuten einer Halterung verschoben und in einer neuen Position befestigt werden.

In üblichen Stufenförderern wird eine gleiche Breite für die Förderoberflächen 8, 9 und die Zwischenlagerflächen 21, 22 verwendet. Wird nun zur Anpassung an die zu fördernden bzw. zu vereinzelnden Teile die Breite 27 der Endstücke 13, 14 angepasst, wobei jedoch die grundsätzliche Geometrie des Stufenförderers 1, insbesondere der Abstand der Förderplatten 15, 16, gleichbleiben soll, resultiert hieraus typischerweise eine unterschiedliche Breite von Förderoberfläche und Zwischenlagerfläche. Um Fallhöhen der Teile bei der Vereinzelung gering zu halten, ist hierbei vorteilhaft, die Förderoberfläche schmaler als die Zwischenlagerfläche zu halten. Bei einer Konfiguration des Stufenförderers für die maximal zu fördernde Teilgröße können die Zwischenlagerflächen 21, 22 und die Förderoberflächen 8, 9 im Wesentlichen die gleiche Ausdehnung senkrecht zur Seitenfläche 10, 11 der feststehenden Platten bzw. in Stapelrichtung 18 aufweisen. Zur Förderung von kleineren Teile kann dann eine Konfiguration genutzt werden, bei der die Ausdehnung der Zwischenlagerfläche 21, 22 in diese Richtung um wenigstens 20 % oder um wenigstens 50 % größer ist als die Ausdehnung der zugeordneten Förderoberfläche 8, 9 in diese Richtung.

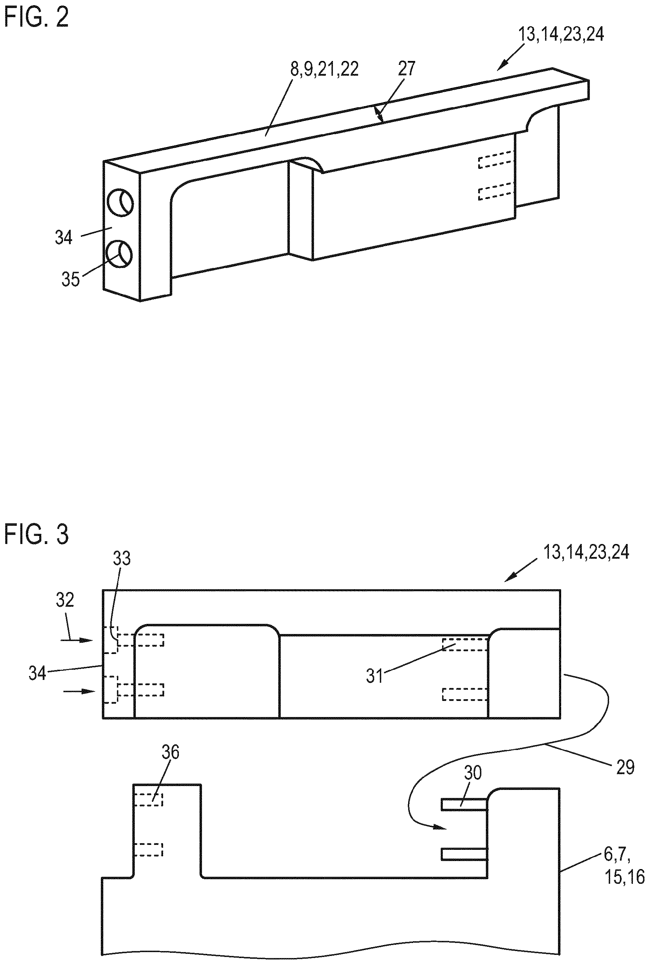

Eine vorteilhafte Möglichkeit, die Endstücke 13, 14 an den Förderplatten 15, 16 zu montieren, wird im Folgenden mit Bezug auf die Figuren 2 und 3 erläutert. Das gleiche Vorgehen kann bevorzugt auch genutzt werden, um die Stützkomponenten 23, 24 an den feststehenden Platten 15, 16 zu befestigen, so dass im Folgenden die Befestigung der Endstücke 13, 14 und der Stützkomponenten 23, 24 gemeinsam diskutiert wird. Es wäre jedoch auch möglich, die Stützkomponenten 23, 24 auf andere Weise zu montieren bzw. statt der Nutzung von Stützkomponenten 23, 24 die Zwischenlagerflächen 21, 22 unmittelbar durch die feststehenden Platten 6, 7 selbst auszubilden.

Fig. 2 zeigt eine perspektivische Ansicht eines beispielhaften Endstücks 13, 14 bzw. einer beispielhaften Stützkomponente 23, 24. Die Förder- bzw. Zwischenlagerfläche 8, 9, 21, 22 ist beispielhaft glatt dargestellt, sie kann jedoch strukturiert sein, um beispielsweise eine Ausrichtung der Teile 2 zu unterstützen. Zudem kann für verschiedene Endstücke 13, 14 bzw. Stützkomponenten 23, 24 die Breite 27 variieren.

Die Montage ist schematisch in Fig. 3 dargestellt. Hierbei wird das jeweilige Endstück 13, 14 bzw. die jeweilige Stützkomponente 23, 24 zunächst, wie schematisch durch den Pfeil 29 dargestellt ist, in Querrichtung, also senkrecht zur Bildebene in Fig. 1, auf die jeweilige Förderplatte 15, 16 bzw. feststehende Platte 6, 7 aufgeschoben, so dass die Führungsstifte 30 in die Ausnehmungen 31 eingeführt werden, womit abgesehen von einer Verschiebbarkeit in Querrichtung die Position und Orientierung des Endstücks 13, 14 bzw. der Stützkomponente 23, 24 bezüglich der jeweiligen Förderplatte 15, 16 bzw. feststehenden Platte 6, 7 bereits festgelegt ist. Hierbei wäre es alternativ selbstverständlich auch möglich, alle oder Teile der Führungsstifte 30 an dem jeweiligen Endstück 13, 14 bzw. an der jeweiligen Stützkomponente 23, 24 vorzusehen und Ausnehmungen zur Aufnahme der Führungsstifte 30 an der jeweiligen Förderplatte 15, 16 bzw. der feststehenden Platte 6, 7 vorzusehen.

Anschließend werden, wie schematisch durch die Pfeile 32 in Fig. 3 dargestellt ist, Befestigungsmittel 33, beispielsweise Schrauben, durch Durchbrechungen 35 der Abschlussfläche 34 des jeweiligen Endstücks 13, 14 bzw. der jeweiligen Stützkomponente 23, 24 geführt, die an die jeweiligen Förderplatte 6, 7 bzw. feststehenden Platte 15, 16 angreifen, d.h. beispielsweise in das jeweilige Gewinde 36 eingeschraubt werden. Hierdurch erfolgt eine robuste Sicherung der Endstücke 13, 14 bzw. Stützkomponenten 23, 24 an der jeweiligen Förderplatte 6, 7 bzw. feststehenden Platte 15, 16. Zugleich wird durch die beschriebene Befestigung erreicht, dass einerseits geförderte Teile 2 die Befestigungsmittel 33 nicht kontaktieren, wodurch eine Verunreinigung von Teilen vermieden werden kann, und andererseits nur von einer Seite in Querrichtung ein Zugang zu dem Stufenförderer 1 erforderlich ist, um die Endstücke 13, 14 bzw. Stützkomponenten 23, 24 zu montieren, zu demontieren bzw. auszutauschen.

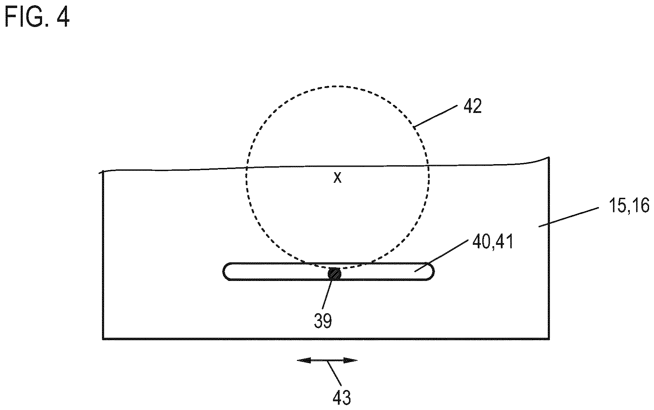

Insbesondere wenn der Stufenförderer 1 in einem Reinraum oder zur Förderung von Lebensmitteln oder Medikamenten genutzt werden soll, wäre ein pneumatischer Antrieb nachteilig, da hierbei ausströmende Luft potentiell zu Verunreinigungen führen könnte. Daher wird im Stufenförderer 1 als Aktor 12 ein Elektromotor verwendet, der eine rotierende Komponente 37, deren Rotation schematisch durch den Pfeil 38 dargestellt ist, antreibt. An der rotierenden Komponente 37 ist ein Vorsprung 39 angeordnet, der, wie insbesondere in Fig. 1 und 4 gut zu erkennen ist, durch Durchbrechungen 40, 41 der Förderplatten 15, 16 geführt ist.

Die Bewegung des Vorsprungs 39 auf einer Kreisbahn 42 ist schematisch in Fig. 4 dargestellt. Wie dort zu erkennen ist, sind die Abmessungen der Durchbrechungen 40, 41 so gewählt, dass in Förderrichtung 17 kaum Spiel des Vorsprungs 39 bezüglich der Durchbrechung 40, 41 besteht, während der Vorsprung 39 in die Querrichtung 43 über die gesamte erreichte Bewegungsstrecke frei beweglich ist. Dies führt dazu, dass die Bewegung des Vorsprungs 39 in Förderrichtung 17 im Wesentlichen vollständig auf die Förderplatten 15, 16 übertragen wird, während bezüglich der Bewegung in die Querrichtung 43 eine Bewegungsentkopplung erfolgt. Die Kreisbewegung des Vorsprungs 39 wird somit in eine Linearbewegung der Förderplatten 15, 16 in die Förderrichtung 17 umgesetzt.

Hierbei wird insbesondere der Vorteil erreicht, dass die Bewegungsgeschwindigkeit der Förderplatten 15, 16 und somit der Förderoberflächen 8, 9 im Bereich der Umkehrpunkte sehr gering ist, wodurch geringere mechanische Belastungen für die Komponenten des Stufenförderers und für die geförderten Teile 2 resultieren.

Da durch den Stufenförderer 1 typischerweise Schüttgut gefördert wird, können gemeinsam mit den Teilen 2 Verunreinigungen, beispielsweise Staub, zum Vorratsbehälter 3 geführt werden. Um möglichst wenig Verunreinigungen in den Stufenförderer 1 einzutragen ist es möglich, dass zwischen dem Vorratsbehälter 3 und der Förderoberfläche 8 bzw. der Förderplatte 15 ein Spalt 44 verbleibt, durch den Verunreinigungen fallen und über eine Sammel- bzw. Abführeinrichtung 45, beispielsweise eine Rutsche, abgeführt werden können.

## Patentansprüche

1. Stufenförderer (1) zur Förderung von Teilen (2) aus einem Vorratsbehälter (3) zu einer oberhalb des Vorratsbehälters (3) liegenden Zielposition (4), wobei der Stufenförderer (1) wenigstens eine feststehende Platte (6, 7) und eine jeweilige der feststehenden Platte (6, 7) zugeordnete Förderoberfläche (8, 9) umfasst, die gewinkelt zu einer Seitenfläche (10, 11) der feststehenden Platte (6, 7) steht und durch einen Aktor (12) des Stufenförderers (1) bezüglich der feststehenden Platte (6, 7) beweglich ist, um die Teile (2) auf der Förderoberfläche (8, 9) entlang dieser Seitenfläche (10, 11) in Förderrichtung (17) anzuheben, wobei die Förderoberfläche (8, 9) oder wenigstens eine der Förderoberflächen (8, 9) durch ein Endstück (13, 14) gebildet ist, das lösbar an einer Förderplatte (15, 16) angebracht ist, die durch den Aktor (12) verschiebbar ist, wobei das Endstück (13, 14) die Förderplatte (15, 16) in die Förderrichtung (17) verlängert,
**dadurch gekennzeichnet,**
**dass** die jeweilige Förderplatte (15, 16) wenigstens einen Führungsstift (30) aufweist, der sich in die oder eine Querrichtung (43) des Stufenförderers (1), die gewinkelt, insbesondere in einem Winkel zwischen 70° und 110°, zur Förderrichtung (17) steht, erstreckt und der in einer jeweiligen Ausnehmung (31) oder Durchbrechung des Endstücks (13, 14) zumindest abschnittsweise aufgenommen ist, und/oder dass das jeweilige Endstück (13, 14) wenigstens einen Führungsstift aufweist, der sich in die Querrichtung (43) des Stufenförderers (1) erstreckt und der in einer jeweiligen Ausnehmung oder Durchbrechung der Förderplatte (15, 16) zumindest abschnittsweise aufgenommen ist.

2. Stufenförderer nach Anspruch 1,
**dadurch gekennzeichnet,**
**dass** das Endstück (13, 14) durch wenigstens ein Befestigungsmittel (33), insbesondere eine Schraube, an der Förderplatte (15, 16) angebracht ist, wobei das Befestigungsmittel (33) eine seitliche Abschlussfläche (34) des Endstücks (13, 14) in eine Querrichtung (43) des Stufenförderers (1), die gewinkelt, insbesondere in einem Winkel zwischen 70° und 110°, zur Förderrichtung (17) steht, durchsetzt und an der Förderplatte (15, 16) angreift, wobei insbesondere die Befestigung des Endstücks (13, 14) ausschließlich über die Befestigungsmittel (33) erfolgt, die die genau eine seitliche Abschlussfläche (34) durchsetzen.

3. Stufenförderer nach einem der vorangehenden Ansprüche,
**dadurch gekennzeichnet,**
**dass** eine durch die feststehende Platte (6, 7) und/oder durch eine an dieser angebrachte Stützkomponente (23, 24) gebildete Zwischenlagerfläche (21, 22), zu der die Teile (2) durch die der jeweiligen feststehenden Platte (6, 7) zugeordnete Förderoberfläche (8, 9) geführt werden, eine um wenigstens 20% oder um wenigstens 50% größere Ausdehnung senkrecht zu der Seitenfläche (10, 11) dieser feststehenden Platte (6, 7) aufweist als die zugeordnete Förderoberfläche (8, 9).

4. Stufenförderer nach einem der vorangehenden Ansprüche,
**dadurch gekennzeichnet,**
**dass** die oder eine Zwischenlagerfläche (21, 22), zu der die Teile (2) durch die jeweilige Förderoberfläche (8, 9) geführt werden, durch die oder eine Stützkomponente (23, 24) gebildet ist, die lösbar an der der jeweiligen Förderoberfläche (21, 22) zugeordneten feststehenden Platte (6, 7) befestigt ist und diese in die Förderrichtung (17) verlängert.

5. Stufenförderer nach einem der vorangehenden Ansprüche,
**dadurch gekennzeichnet,**
**dass** der Aktor (12) ein Elektromotor ist und/oder dass der Aktor (12) dazu dient, eine Rotation einer drehbaren Komponente (37) anzutreiben, die derart mit der Förderoberfläche (8, 9) gekoppelt ist, dass eine Rotation der drehbaren Komponente (37) zu einer linearen Verschiebung der Förderoberfläche (8, 9) führt.

6. Stufenförderer nach Anspruch 5,
**dadurch gekennzeichnet,**
**dass** die drehbare Komponente (37) einen gegenüber ihrer Drehachse exzentrisch angeordneten Vorsprung (39) aufweist, der in eine Ausnehmung oder Durchbrechung (40, 41) der Förderplatte (15, 16) oder wenigstens einer der Förderplatten (15, 16) oder einer jeweiligen starr mit der jeweiligen Förderplatte (15, 16) verbundenen Kopplungskomponente eingreift.

7. Stufenförderer nach einem der vorangehenden Ansprüche,
**dadurch gekennzeichnet,**
**dass** er wenigstens zwei der Förderplatten (15, 16) umfasst, wobei die Förderplatten (15, 16) derart mit dem Aktor (12) gekoppelt sind, dass sie bei einem Betrieb des Aktors (12) gemeinsam und in die gleiche Richtung bewegt werden.

8. Stufenfördersystem, umfassend einen Stufenförderer (1) nach einem der vorangehenden Ansprüche,
wobei
das Stufenfördersystem wenigstens ein Austauschendstück (26) umfasst, wobei das Austauschendstück (26) dazu dient, ein jeweiliges zugeordnetes Endstück (13, 14) des Stufenförderers (1) im Rahmen einer Umrüstung zu ersetzen.

9. Stufenfördersystem nach Anspruch 8,
**dadurch gekennzeichnet,**
**dass** die durch das Austauschendstück (26) im montierten Zustand gebildete Förderoberfläche (8, 9) eine Ausdehnung senkrecht zur Seitenfläche (10, 11) der zugeordneten feststehenden Platte (6, 7) aufweist, die sich von der Ausdehnung der Förderoberfläche (8, 9) des zugeordneten Endstücks (13, 14) in diese Richtung unterscheidet.

10. Verfahren zur Änderung der Stufenbreite eines Stufenförderers nach einem der Ansprüche 1 bis 7,
wobei
wenigstens ein Endstück (13, 14) des Stufenförderers (1) durch ein Austauschendstück (26) ersetzt wird, wobei die durch das Austauschendstück (26) im montierten Zustand gebildete Förderoberfläche (8, 9) eine Ausdehnung senkrecht zur Seitenfläche (10, 11) der zugeordneten feststehenden Platte (6, 7) aufweist, die sich von der Ausdehnung der Förderoberfläche (8, 9) des vorangehend montierten Endstücks (13, 14) in diese Richtung unterscheidet.

## Claims

1. Step conveyor (1) for conveying parts (2) from a storage container (3) to a target position (4) which is situated above the storage container (3), wherein the step conveyor (1) comprises at least one fixed plate (6, 7) and one respective conveying surface (8, 9), which is associated with the fixed plate (6, 7) and is positioned at an angle to a side surface (10, 11) of the fixed plate (6, 7) and, by way of an actuator (12) of the step conveyor (1), is movable in relation to the fixed plate (6, 7) in order for the parts (2) on the conveying surface (8, 9) to be lifted along said side surface (10, 11) in the conveying direction (17), wherein the conveying surface (8, 9) or at least one of the conveying surfaces (8, 9) is formed by an end piece (13, 14) which is attached in a releasable manner to a conveying plate (15, 16) which is displaceable by way of the actuator (12), wherein the end piece (13, 14) extends the conveying plate (15, 16) in the conveying direction (17),
**characterized**
**in that** the respective conveying plate (15, 16) has at least one guide pin (30) extending in the or a transverse direction (43) of the step conveyor (1), which transverse direction is at an angle, in particular at an angle of between 70° and 110°, to the conveying direction (17), and accommodated at least sectionally in a respective cutout (31) or aperture of the end piece (13, 14), and/or in that the respective end piece (13, 14) has at least one guide pin extending in the transverse direction (43) of the step conveyor (1) and accommodated at least sectionally in a respective cutout or aperture of the conveying plate (15, 16).

2. Step conveyor according to Claim 1,
**characterized**
**in that** the end piece (13, 14) is attached to the conveying plate (15, 16) by at least one fastening means (33), in particular a screw, wherein the fastening means (33) passes through a lateral terminating surface (34) of the end piece (13, 14) in a transverse direction (43) of the step conveyor (1), which transverse direction is at an angle, in particular at an angle of between 70° and 110°, to the conveying direction (17), and acts on the conveying plate (15, 16), wherein in particular the fastening of the end piece (13, 14) is realized exclusively via the fastening means (33), which pass through the exactly one lateral terminating surface (34) .

3. Step conveyor according to either of the preceding claims,
**characterized**
**in that** a temporary holding surface (21, 22) which is formed by the fixed plate (6, 7) and/or by a supporting component (23, 24) attached to said fixed plate and to which the parts (2) are guided by the conveying surface (8, 9) associated with the respective fixed plate (6, 7) has an extent perpendicular to the side surface (10, 11) of said fixed plate (6, 7) that is at least 20% or at least 50% larger than that of the associated conveying surface (8, 9).

4. Step conveyor according to one of the preceding claims,
**characterized**
**in that** the or a temporary holding surface (21, 22) to which the parts (2) are guided by the respective conveying surface (8, 9) is formed by the or a supporting component (23, 24) which is fastened in a releasable manner to the fixed plate (6, 7) associated with the respective conveying surface (21, 22) and which extends said fixed plate in the conveying direction (17).

5. Step conveyor according to one of the preceding claims,
**characterized**
**in that** the actuator (12) is an electric motor, and/or in that the actuator (12) serves to drive a rotation of a rotatable component (37) which is coupled to the conveying surface (8, 9) in such a way that a rotation of the rotatable component (37) results in a linear displacement of the conveying surface (8, 9).

6. Step conveyor according to Claim 5,
**characterized**
**in that** the rotatable component (37) has a projection (39) which is arranged eccentrically in relation to its axis of rotation and which engages into a cutout or aperture (40, 41) of the conveying plate (15, 16) or of at least one of the conveying plates (15, 16) or of a respective coupling element connected rigidly to the respective conveying plate (15, 16).

7. Step conveyor according to one of the preceding claims,
**characterized**
**in that** said step conveyor comprises at least two of the conveying plates (15, 16), wherein the conveying plates (15, 16) are coupled to the actuator (12) in such a way that, during operation of the actuator (12), they are moved together and in the same direction.

8. Step conveying system comprising a step conveyor (1) according to one of the preceding claims, wherein the step conveying system comprises at least one exchange end piece (26), wherein the exchange end piece (26) serves to replace a respective associated end piece (13, 14) of the step conveyor (1) in the course of a retrofitting procedure.

9. Step conveying system according to Claim 8, **characterized**
**in that** the conveying surface (8, 9) formed by the exchange end piece (26) in the mounted state has an extent perpendicular to the side surface (10, 11) of the associated fixed plate (6, 7) that is different from the extent of the conveying surface (8, 9) of the associated end piece (13, 14) in this direction.

10. Method for changing the step width of a step conveyor according to one of Claims 1 to 7, wherein at least one end piece (13, 14) of the step conveyor (1) is replaced by an exchange end piece (26), wherein the conveying surface (8, 9) formed by the exchange end piece (26) in the mounted state has an extent perpendicular to the side surface (10, 11) of the associated fixed plate (6, 7) that is different from the extent of the conveying surface (8, 9) of the previously mounted end piece (13, 14) in this direction.

## Revendications

1. Transporteur étagé (1) pour transporter des pièces (2) d'un réservoir (3) à une position cible (4) située au-dessus du réservoir (3), le transporteur étagé (1) comprenant au moins une plaque fixe (6, 7) et une surface de transport respective (8, 9) associée à la plaque fixe (6, 7), qui est inclinée par rapport à une surface latérale (10, 11) de la plaque fixe (6, 7), 7) et est mobile par rapport à la plaque fixe (6, 7) grâce à un actionneur (12) du transporteur étagé (1), afin de soulever les pièces (2) sur la surface de transport (8, 9) le long de cette surface latérale (10, 11) dans la direction de transport (17), la surface de transport (8, 9) ou au moins l'une des surfaces de transport (8, 9) étant formée par une pièce d'extrémité (13, 14) qui est montée de manière amovible sur une plaque de transport (15, 16), qui peut être déplacée par l'actionneur (12), la pièce d'extrémité (13, 14) prolongeant la plaque de transport (15, 16) dans la direction de transport (17), **caractérisé en ce que**
la plaque de transport respective (15, 16) présente au moins une tige de guidage (30) qui s'étend dans la ou une direction transversale (43) du transporteur étagé (1), qui est inclinée, notamment selon un angle compris entre 70° et 110°, par rapport à la direction de transport (17), et qui est reçue au moins par sections dans un évidement respectif (31) ou une ouverture respective de la pièce d'extrémité (13, 14), et/ou **en ce que** la pièce d'extrémité respective (13, 14) présente au moins une tige de guidage qui s'étend dans la direction transversale (43) du transporteur étagé (1) et qui est reçue au moins par sections dans un évidement respectif ou une ouverture respective de la plaque de transport (15, 16).

2. Transporteur étagé selon la revendication 1, **caractérisé en ce que**
la pièce d'extrémité (13, 14) est montée sur la plaque de transport (15, 16) par au moins un moyen de fixation (33), notamment une vis, le moyen de fixation (33) traversant une surface de terminaison latérale (34) de la pièce d'extrémité (13, 14) dans une direction transversale (43) du transporteur étagé (1), qui est inclinée, notamment d'un angle compris entre 70° et 110°, par rapport à la direction de transport (17), et s'engage sur la plaque de transport (15, 16), la fixation de la pièce d'extrémité (13, 14) s'effectuant notamment exclusivement par l'intermédiaire des moyens de fixation (33) qui traversent exactement une surface de terminaison latérale (34).

3. Transporteur étagé selon l'une quelconque des revendications précédentes, **caractérisé en ce qu'**une surface d'entreposage (21, 22) formée par la plaque fixe (6, 7) et/ou par un composant d'appui (23, 24) monté sur celle-ci, vers laquelle les pièces (2) sont guidées par la surface de transport (8, 9) associée à la plaque fixe respective (6, 7), présente une extension perpendiculaire à la surface latérale (10, 11) de cette plaque fixe (6, 7) supérieure d'au moins 20 % ou d'au moins 50 % à celle de la surface de transport associée (8, 9).

4. Transporteur étagé selon l'une quelconque des revendications précédentes, **caractérisé en ce que** la ou une surface d'entreposage (21, 22) vers laquelle les pièces (2) sont guidées par la surface de transport respective (8, 9) est formée par le ou un composant d'appui (23, 24) qui est fixé de manière amovible à la plaque fixe (6, 7) associée à la surface de transport respective (21, 22) et prolonge celle-ci dans la direction de transport (17).

5. Transporteur étagé selon l'une quelconque des revendications précédentes,
**caractérisé en ce que**
l'actionneur (12) est un moteur électrique et/ou **en ce que** l'actionneur (12) sert à entraîner en rotation un composant rotatif (37) couplé à la surface de transport (8, 9) de telle sorte qu'une rotation du composant rotatif (37) entraîne un déplacement linéaire de la surface de transport (8, 9).

6. Transporteur étagé selon la revendication 5, **caractérisé en ce que**
le composant rotatif (37) présente une saillie (39) agencée de manière excentrée par rapport à son axe de rotation, qui s'engage dans un évidement ou une ouverture (40, 41) de la plaque de transport (15, 16) ou d'au moins l'une des plaques de transport (15, 16) ou d'un composant de couplage respectif relié rigidement à la plaque de transport respective (15, 16).

7. Transporteur étagé selon l'une quelconque des revendications précédentes,
**caractérisé en ce**
**qu'**il comprend au moins deux des plaques de transport (15, 16), les plaques de transport (15, 16) étant couplées à l'actionneur (12) de telle sorte qu'elles sont déplacées ensemble et dans la même direction lors d'un fonctionnement de l'actionneur (12).

8. Système de transport étagé, comprenant un transporteur étagé (1) selon l'une quelconque des revendications précédentes,
le système de transport étagé comprenant au moins une pièce d'extrémité de remplacement (26), la pièce d'extrémité de remplacement (26) servant à remplacer une pièce d'extrémité associée respective (13, 14) du transporteur étagé (1) dans le cadre d'un réaménagement.

9. Système de transporteur étagé selon la revendication 8,
**caractérisé en ce que**
la surface de transport (8, 9) formée par la pièce d'extrémité de remplacement (26) à l'état monté présente une extension perpendiculaire à la surface latérale (10, 11) de la plaque fixe associée (6, 7) qui est différente de l'extension de la surface de transport (8, 9) de la pièce d'extrémité associée (13, 14) dans cette direction.

10. Procédé de modification de la largeur d'étage d'un transporteur étagé selon l'une quelconque des revendications 1 à 7,
au moins une pièce d'extrémité (13, 14) du transporteur étagé (1) étant remplacée par une pièce d'extrémité de remplacement (26), la surface de transport (8, 9) formée par la pièce d'extrémité de remplacement (26) à l'état monté présentant une extension perpendiculaire à la surface latérale (10, 11) de la plaque fixe associée (6, 7) qui est différente de l'extension dans cette direction de la surface de transport (8, 9) de la pièce d'extrémité précédemment montée (13, 14).
